# EUROPÄISCHE PATENTSCHRIFT

(11) **EP 2 422 865 B1**
(45) Veröffentlichungstag und Bekanntmachung des Hinweises auf die Patenterteilung: **16.12.2015**
(21) Anmeldenummer: 11004692.7
(22) Anmeldetag: 09.06.2011
(51) Int. Cl.: B01D 36/00, B01D 45/08, B01D 46/00, B01D 50/00, B08B 15/02

(54) **SCHWEISSRAUCHABSAUGANLAGE**
WELDING SMOKE WASTE GAS SYSTEM
INSTALLATION D'ASPIRATION DE FUMÉE DE SOUDURE

(30) Priorität: 28.08.2010 DE 202010009611 U
(43) Veröffentlichungstag der Anmeldung: 29.02.2012
(73) Patentinhaber: ESTA Apparatebau GmbH & Co.KG, 89250 Senden (DE)
(72) Erfinder: Drabner, Manfred, 01259 Dresden- Kleinschwachwitz (DE)
(74) Vertreter: Meyer, Thorsten

(56) Entgegenhaltungen:
- CA-A- 671 835
- DE-A1- 10 354 914
- US-A- 4 078 477
- US-A- 5 281 246
- US-A- 5 511 764

## Beschreibung

Die Erfindung betrifft eine Schweißrauchabsauganlage mit einem vertikalen Aufbau.

In Arbeitsbereichen in geschlossenen Räumen in denen die Raumluft mit Partikeln verunreinigt ist, wie dies insbesondere bei Schweißrauch der Fall ist, besteht die Notwendigkeit der Filterung.

Bisher bekannte Anlagen ziehen einen Luftstrom dabei durch Filterkörper und geben den gereinigten Luftstrom danach zumeist an der Oberseite des Anlagengehäuses wieder in den Arbeitsraum ab.

Dabei werden die Absauganlagen für industrielle Anwendungen oft durch den Partikel-belasteten Luftstrom in der Funktion beeinträchtigt. So führt ein hoher Partikelanteil zu vorschnellem Zusetzen der in solchen Absauganlagen vorgesehenen Filter. Zudem ist gerade bei Schweißrauch belasteter Luft problematisch, dass diese noch heiße oder glühende Partikel und Teilchen enthalten können welche zu einem Abbrand des Filters oder dem Luftstrom ausgesetzten Teilen wie Schläuche oder dergleichen der Anlage führen können.

Gerade bei Schweißrauch-belasteter Luft werden dabei durch die heißen Gase die Partikel an die Hallendecke mitgezogen und verweilen dort bis diese sich mit dem Luft abkühlen.

Aus der US 5,281,246 ist ein Luftreinigungsanlage bekannt, bei der durch einen teleskopartigen Rüssel Luft von oben in eine Absauganlage geführt wird und durch einen zunächst senkrechten, dann horizontalen Kanal auf ein Umlenkblech geführt wird und danach auf horizontal angeordnete Rundfilter geführt wird.

Aus der US 5,511,764 ist eine Absauganlage mit vertikalem Kanal und Filterelementen bekannt, bei der ein seitlich neben den Filterelementen angeordnetes Gebläse den Volumenstrom erzeugt.

Aufgabe der Erfindung ist es daher eine Schweißrauchabsauganlage zur Verfügung zu stellen, bei der eine verbesserte Luftreinigung und effiziente Partikelabscheidung gegeben ist.

Diese Aufgabe wird durch eine Schweißrauchabsauganlage nach den Merkmalen des Anspruchs 1 gelöst.

Erfindungsgemäß ist vorgeschlagen eine Schweißrauchabsauganlage mit einem vertikalen Aufbau so auszugestalten, dass am oberen Bereich der Anlage eine Ansaugöffnung vorgesehen ist durch die mit Schweißrauch belastete Luft angesaugt werden kann, wobei im Innern der Anlage ein Vertikalkanal vorgesehen ist durch welchen die angesaugte belastete Luft im Innern der Anlage nach unten geführt wird, wobei der Vertikalkanal im unteren Bereich der Anlage seitlich eine Öffnung aufweist, durch welchen der Luftstrom auf einen im Bereich der Öffnung angeordneten Partikelprallabscheider gelenkt wird und durch diesen hindurchgeführt wird, wobei im Luftweg nach dem Partikelprallabscheider eine Filterkammer vorgesehen ist, in die der Luftstrom nach dem Partikelprallabscheider gelangt, wobei in der Filterkammer ein oder mehrere Filterkörper angeordnet ist/sind, wobei im Luftweg nach der Filterkammer ein den Luftstrom antreibendes Gebläse vorgesehen ist, wobei der Luftstrom im Innern des/der Filterkörper angesaugt wird und nach seitlichem Anströmen des/der Filterkörper/s nach oben durch das über den Filterkörpern angeordnete Gebläse aus der Filterkammer geführt wird, wobei der gefilterte Luftstrom an im unteren Bereich der Anlage liegenden Ausblasöffnungen wieder nach außen gegeben wird, wobei unter dem Vertikalkanal und/oder dem Partikelprallabscheider eine Auffangschale vorgesehen ist, welche insbesondere ähnlich einer Schublade ausgeführt ist, wobei der Partikelprallabscheider mit zwei senkrecht angeordnete Gruppen von parallel zueinander angeordneten V-Profilen ausgestaltet ist, welche im Querschnitt V-förmig ausgestaltet sind, wobei die V-Profile der ersten Gruppe mit der Spitze des V-förmigen Querschnitts in Anströmrichtung ausgerichtet sind, und die V-Profile der zweiten Gruppe mit der Spitze des V-förmigen Querschnitts entgegengesetzt der Anströmrichtung ausgerichtet sind und gegenüber der ersten Gruppe nach hinten versetzt sind, wobei die V-Profile der zweiten Gruppe dabei so seitlich und nach hinten gegenüber den V-Profilen der ersten Gruppe versetzt sind, dass die Spitzen des V-förmigen Querschnitts in der Mitte zwischen Lücken der Spitzen des V-förmigen Querschnitts der V-Profile der ersten Gruppe angeordnet sind, und dass die von den Spitzen der V-förmigen Querschnitte abragenden Schenkel in einem Teilbereich sich Überdecken und so einen Schlitzkanal bilden.

Durch die Erfindung wird im Unterschied zum Stand der Technik die schmutzhaltige Luft an der Oberseite des Gerätes angesaugt und an den beiden Seiten unten gereinigt wieder ausgeblasen.

Mit der Erfindung wird eine sehr effektive Reinigung gewährleistet, wodurch die Staubbeladung des Luftstroms deutlich sinkt und die Filterelemente nur noch mit feinen Staubpartikeln beaufschlagt werden. Dies führt zu einer deutlichen Verlängerung der Filterstandzeit und einer Reduktion der Betriebskosten, da weniger Druckluft für die Filterreinigung erforderlich ist und die Lebensdauer der Filter verlängert wird.

Durch die Umlenkung des Luftstroms auf einen im Bereich der Öffnung angeordneten Partikelprallabscheider, wodurch schwerere Teilchen zum einen im Vertikalkanal nach weiter nach unten Fallen, und kleinere noch durch den Luftstrom mitgeführte Teilchen im Prallabscheider gebremst werden und im Prallabscheider nach unten fallen, wird ein Großteil der Partikel noch vor Erreichen der Filterkörper ausgeschieden und die Standzeit der Anlage erheblich verlängert.

Erfindungsgemäße Anlagen können sowohl als Entstaubungsanlagen zur Abscheidung grober Materialien als auch als Schweiß-, Laser- und Brennschneid- und Rauchabsauganlagen eingesetzt werden. Beim Einsatz als Rauchabsauganlagen verhindert der vorgeschlagene Partikelprallabscheider effektiv, dass im Luftstrom enthaltene Funken auf die nachfolgenden Filterelemente treffen können und vermindert so das Risiko von Filterbränden.

Von Vorteil ist unter dem Vertikalkanal und/oder dem Partikelprallabscheider eine Auffangschale vorgesehen, welche insbesondere ähnlich einer Schublade ausgeführt ist. Hierdurch ist eine Wartung und Leerung der Anlage sehr leicht möglich.

Bevorzugterweise ist die Ansaugöffnung an der Oberseite des Gehäuses der Anlage vorgesehen. Hierdurch wird die Thermik der Luft noch besser berücksichtigt.

Eine vorteilhafte Ausgestaltung der Erfindung sieht vor, dass der Luftstrom nach passieren der Filterkammer, oberhalb derselben durch einen oder mehrere Führungskanäle zum unteren Bereich der Anlage zu den Ausblasöffnungen geführt wird.

Die abgeschiedenen Partikel können so in einer Auffangvorrichtung unterhalb des Partikelprallabscheider gesammelt werden. Die im "Knick" der V-Profile abgebremsten Partikel können so unten aus dem Partikelprallabscheider herausfallen. Beim Einsatz in Rauchgasabsauganlagen ist ein separater Auffangbehälter von Vorteil, der vom Auffangbehälter unter den Filterelementen getrennt ist.

Als weiterer Vorteil neben der Vorabscheidung bewirkt der Partikelprallabscheider, dass der angesaugte Luftvolumenstrom großflächig und gleichmäßig seitlich auf die nachgeschalteten Filterelemente verteilt wird. Dadurch wird die Aufströmgeschwindigkeit innerhalb des Filtergehäuses erheblich reduziert und die gleichmäßige Beaufschlagung aller Filterelemente mit der angesaugten Luft unterstützt.

Die Größe des Partikelprallabscheiders ist dem jeweiligen Luftvolumenstrom der Absauganlage, in welche er integriert wird, angepasst.

Von Vorteil ist/sind der/die Führungskanäle seitlich an Gebläse und Filterkammer vorbeigeführt. Weitere vorteilhafte Ausgestaltungen ergeben sich aus den weiteren Unteransprüchen oder deren mögliche Unterkombinationen.

Nachfolgend wird die Erfindung anhand der Zeichnungen weiter erläutert. Im Einzelnen zeigt die schematische Darstellung in:
- Fig. 1: eine schematische Darstellung einer erfindungsgemäßen Schweißrauchabsauganlage,
- Fig. 2: eine schematische Darstellung der Schweißrauchabsauganlage aus Fig. 1 mit montierten Seitenteilen in denen die Führungskanäle verlaufen,
- Fig. 3: eine schematische Darstellung eines erfindungsgemäßen Partikelprallabscheider für einen Partikelverunreinigten Luftstrom zur waagerechten Anströmung,
- Fig. 4: eine schematische Schnittdarstellung durch den Partikelprallabscheider aus Fig. 3, und
- Fig. 5: das vergrößerte Detail IV aus Fig. 4.

Die in den Figuren gleichen Bezugsziffern bezeichnen gleiche oder gleich wirkende Elemente.

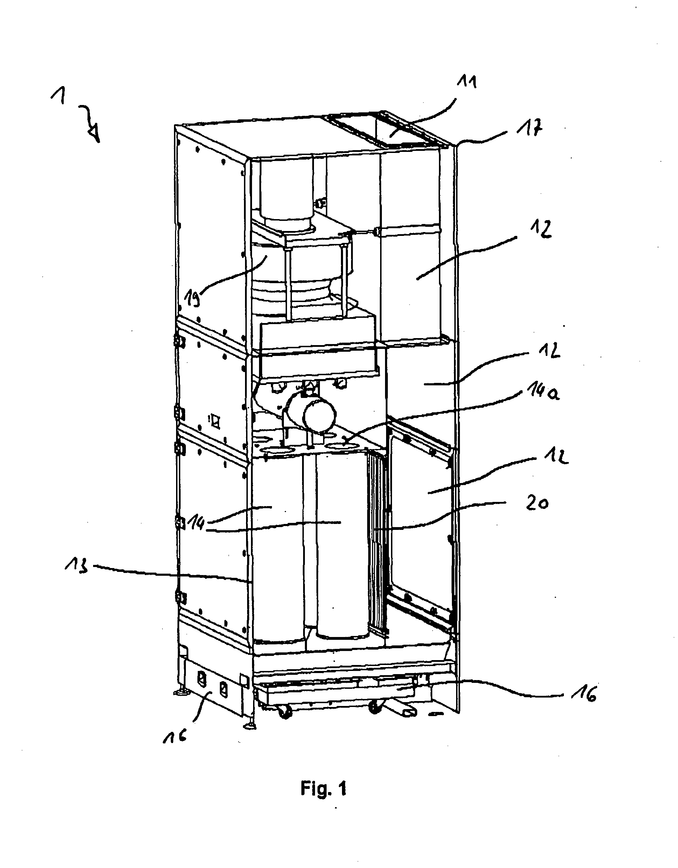

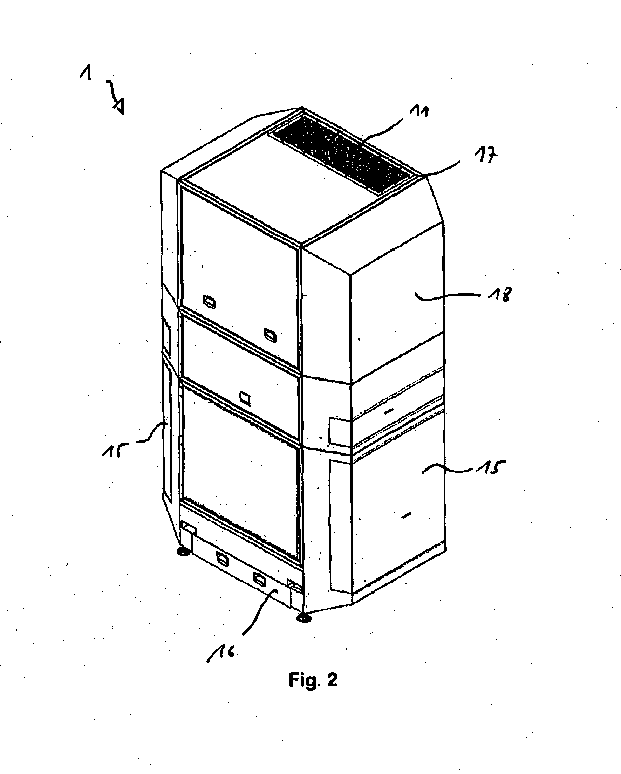

Fig. 1 und 2 zeigt die Schweißrauchabsauganlage 1 mit einem vertikalen Aufbau, wobei am oberen Bereich der Anlage auf der Oberseite des Gehäuses 17 eine Ansaugöffnung 11 vorgesehen ist durch die mit Schweißrauch belastete Luft angesaugt werden kann, der nach Reinigung um Innern durch unteren Bereich der Anlage liegende Ausblasöffnungen 15 wieder nach außen gegeben wird (siehe Fig. 2).

In Fig. 1 ist der innere Aufbau der Anlage näher gezeigt. Im Innern der Anlage ist ein Vertikalkanal 12 vorgesehen durch welchen die angesaugte belastete Luft im Innern der Anlage senkrecht nach unten geführt wird, wobei der Vertikalkanal 12 im unteren Bereich der Anlage seitlich eine Öffnung aufweist, durch welchen der Luftstrom auf einen im Bereich der Öffnung angeordneten Partikelprallabscheider 20 gelenkt wird und durch diesen hindurchgeführt wird.

Hierdurch werden größere Partikel gleich abgeschieden, da diese nach unten in die Auffangschale 16 fallen und nicht der Umlenkung des Luftstromes folgen.

Im Luftweg nach dem Partikelprallabscheider 20 ist eine Filterkammer 13 vorgesehen, in die der Luftstrom nach dem Partikelprallabscheider gelangt. Dabei sind in der Filterkammer 13 mehrere Filterkörper 14 angeordnet, wobei der Luftstrom im Innern der Filterkörper 14 durch das darüber angeordnete, den Luftstrom antreibende, Gebläse 19 angetrieben ist.

Nach Anströmen der Filterkörper 14 wird der Luftstrom aus der Filterkammer 13 geführt (Position 14a) und der gefilterte Luftstrom wird durch die Führungskanäle 18 (siehe Fig. 2) an im unteren Bereich der Anlage liegenden Ausblasöffnungen 15 wieder nach außen gegeben.

Wie bereits erwähnt ist unter dem Vertikalkanal 12 und dem Partikelprallabscheider 20 die Auffangschale 16 vorgesehen, welche ähnlich einer nach außen ausziehbaren Schublade ausgeführt ist.

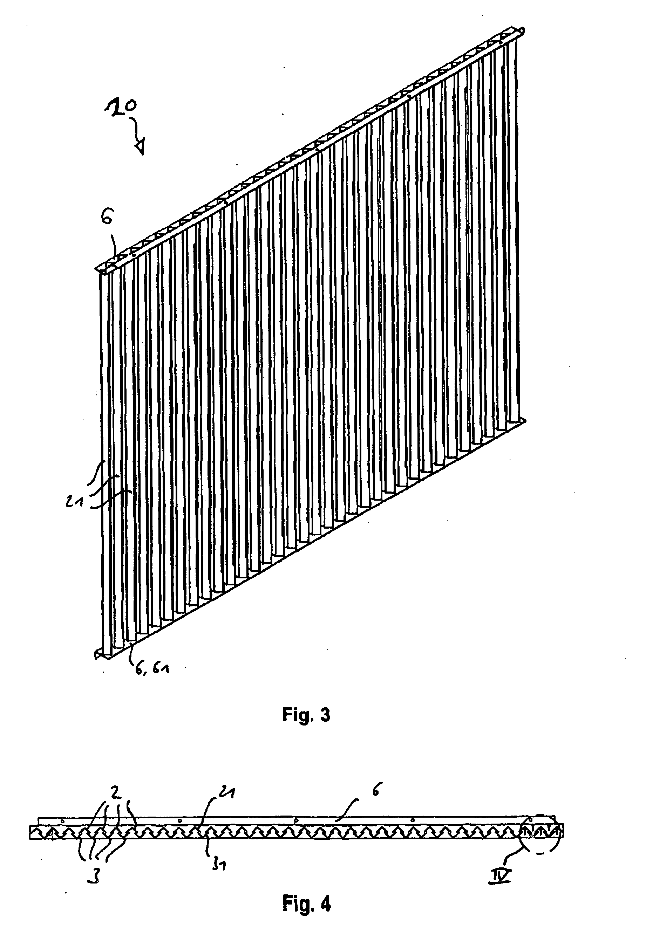

Die Fig. 3 bis 5 zeigen einen beispielhaften Partikelprallabscheider 20 zur waagerechten Anströmung nach der Umlenkung aus dem Vertikalkanal.

Die V-Profile 21, 31 sind dabei parallel zueinander und senkrecht orientiert in zwei Gruppen 2 und 3 angeordnet, von V-Profilen. Im waagerechten Querschnitt sind dieser V-förmig ausgestaltet (siehe Fig. 4).

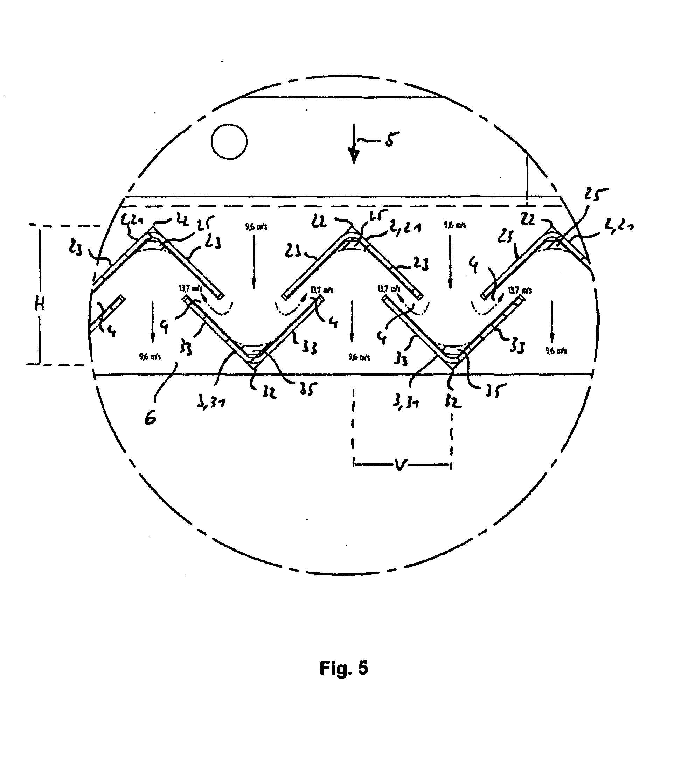

In Fig. 4 und 5 ist ersichtlich, dass die V-Profile 21 der ersten Gruppe 2 mit der Spitze 22 des V-förmigen Querschnitts in Anströmrichtung 5, die V-Profile 31 der zweiten Gruppe 3 mit der Spitze 32 des V-förmigen Querschnitts entgegengesetzt der Anströmrichtung 5 ausgerichtet sind.

Dabei sind die Gruppen 2 und 3 gegeneinander nach hinten versetzt (H) sind, und so seitlich (V) versetzt sind, dass die Spitzen 32 des V-förmigen Querschnitts in der Mitte zwischen Lücken der Spitzen 22 des V-förmigen Querschnitts der V-Profile 21 der ersten Gruppe 2 angeordnet sind (siehe Fig. 4).

Die von den Spitzen 22, 32 der V-förmigen Querschnitte abragenden Schenkel 23, 33 Überdecken sich in einem Teilbereich dergestalt, dass diese jeweils einen Schlitzkanal 4 bilden.

Die strömungstechnische Auslegung des Partikelprallabscheider kann dabei so erfolgen, dass alle Partikel, die größer sind als eine vorgewählte Größe aufgrund der aus ihrer größeren Masse resultierenden Fliehkraft in die strömungstoten Bereiche der Knicke auf der Rückseite der Spitzen der V-Profile 21, 31 geleitet werden. In diesem strömungstoten Bereich ist der abwärtsgerichtete Geschwindigkeitsvektor in Relation so groß, dass die Partikel nach unten abgeleitet und abgeschieden werden. Kleinere Partikel, deren Größe unterhalb der vorgewählten Größe liegen, passieren den Partikelprallabscheider.

Durch die gegenseitig ausgerichteten Profile findet dieser Separationsvorgang zweimal hintereinander statt.

Beim Einsatz in Rauchabsauganlagen, in denen Funken und/oder glühende Partikel vor abgeschieden werden sollen, wird durch die o.g. Funktionsweise sichergestellt, dass im kalkulierbaren Regelfall die thermische Energie der Partikel keine Gefahr mehr für die nach geschalteten Filterelemente darstellt, da die kinetische Energie bei < 10 mJ liegt. Dieser Wert wird erst bei einer Partikelgröße > 260 µm erreicht.

Die größeren - und damit zündfähigen Partikel werden durch nach unten abgeschieden. Die feineren Partikel, die keine relevante Zündenergie besitzen, werden durch die Querströmung durch den Partikelprallabscheider geleitet.

### Bezugszeichenliste

- 1: Schweißrauchabsauganlage
- 11: Ansaugöffnung
- 12: Vertikalkanal
- 13: Filterkammer
- 14: Filterkörper
- 15: Ausblasöffnungen
- 16: Auffangschale
- 17: Gehäuse
- 18: Führungskanal
- 19: Gebläse
- 20: Partikelprallabscheider
- 2: erste Gruppe
- 21: V-Profil
- 22: Spitze
- 23: Schenkel
- 24: Ende
- 25: strömungstoter Bereich
- 3: zweite Gruppe
- 31: V-Profil
- 32: Spitze
- 33: Schenkel
- 34: Ende
- 35: strömungstoter Bereich
- 4: Schlitzkanal
- 5: Anströmrichtung
- 6: Rahmen
- 61: Profilschiene
- H: nach hinten versetzt
- V: seitlich versetzt

## Patentansprüche

1. Schweißrauchabsauganlage (1) mit einem vertikalen Aufbau, wobei am oberen Bereich der Anlage eine Ansaugöffnung (11) vorgesehen ist durch die mit Schweißrauch belastete Luft angesaugt werden kann,
wobei im Innern der Anlage ein Vertikalkanal (12) vorgesehen ist durch welchen die angesaugte belastete Luft im Innern der Anlage nach unten geführt wird,
wobei der Vertikalkanal (12) im unteren Bereich der Anlage seitlich eine Öffnung aufweist, durch welchen der Luftstrom auf einen im Bereich der Öffnung angeordneten Partikelprallabscheider (20) gelenkt wird und durch diesen hindurchgeführt wird,
wobei im Luftweg nach dem Partikelprallabscheider (20) eine Filterkammer (13) vorgesehen ist, in die der Luftstrom nach dem Partikelprallabscheider gelangt, wobei in der Filterkammer (13) ein öder mehrere Filterkörper (14) angeordnet ist/sind,
wobei im Luftweg nach der Filterkammer (13) ein den Luftstrom antreibendes Gebläse (19) vorgesehen ist,
wobei der Luftstrom im Innern des/der Filterkörper (14) angesaugt wird und nach Anströmen des/der Filterkörper/s (14)
nach oben durch das über den Filterkörpern (14) angeordnete Gebläse (19) aus der Filterkammer (13) geführt wird, wobei der gefilterte Luftstrom an im unteren Bereich der Anlage liegenden Ausblasöffnungen (15) wieder nach außen gegeben wird,
**dadurch gekennzeichnet,**
**dass** der Partikelprallabscheider (20) mit zwei senkrecht angeordnete Gruppen (2 und 3) von parallel zueinander angeordneten V-Profilen (21, 31) ausgestaltet ist, welche im Querschnitt V-förmig ausgestaltet sind, wobei die V-Profile (21) der ersten Gruppe (2) mit der Spitze (22) des V-förmigen Querschnitts in Anströmrichtung (5) ausgerichtet sind, und die V-Profile (31) der zweiten Gruppe (3) mit der Spitze (32) des V-förmigen Querschnitts entgegengesetzt der Anströmrichtung (5) ausgerichtet sind und gegenüber der ersten Gruppe (2) nach hinten versetzt (H) sind, wobei die V-Profile (31) der zweiten Gruppe (3) dabei so seitlich (V) und nach hinten gegenüber den V-Profilen (21) der ersten Gruppe (2) versetzt sind, dass die Spitzen (32) des V-förmigen Querschnitts in der Mitte zwischen Lücken der Spitzen (22) des V-förmigen Querschnitts der V-Profile (21) der ersten Gruppe (2) angeordnet sind, und dass die von den Spitzen (22, 32) der V-förmigen Querschnitte abragenden Schenkel (23, 33) in einem Teilbereich sich Überdecken und so einen Schlitzkanal (4) bilden.

2. Schweißrauchabsauganlage nach Anspruch 1,
**dadurch gekennzeichnet,**
**dass** unter dem Vertikalkanal (12) und/oder dem Partikelprallabscheider (20) eine Auffangschale (16) vorgesehen ist, welche insbesondere ähnlich einer Schublade ausgeführt ist.

3. Schweißrauchabsauganlage nach Anspruch 1 oder 2,
**dadurch gekennzeichnet,**
**dass** Ansaugöffnung (11) an der Oberseite des Gehäuses (17) der Anlage vorgesehen ist.

4. Schweißrauchabsauganlage nach einem der Ansprüche 1 bis 3,
**dadurch gekennzeichnet,**
**dass** einer oder mehrere Führungskanäle (18) angeordnet sind, vermittels welcher der Luftstrom von oberhalb der Filterkammer (13) zum unteren Bereich der Anlage zu den Ausblasöffnungen (15) führbar ist.

5. Schweißrauchabsauganlage nach einem der vorhergehenden Ansprüche,
**dadurch gekennzeichnet,**
**dass** der/die Führungskanäle (18) seitlich an Gebläse (19) und Filterkammer (13) vorbeigeführt ist/sind.

## Claims

1. A welding-smoke extraction system (1) with a vertical structure,
wherein an aspiration opening (11) is provided on the upper region of the system, through which the air polluted with welding smoke can be aspirated,
wherein a vertical channel (12) is provided in the interior of the system, through which the aspirated polluted air in the interior of the system is conducted downwards,
wherein the vertical channel (12) has an opening in the lower region of the system on the side, through which opening the air flow is deflected to a particle impact separator (20) arranged in the region of the opening and is guided through the same,
wherein a filter chamber (13) is provided in the air passage downstream of the particle impact separator (20), into which the airflow passes downstream of the particle impact separator, wherein one or a plurality of filter body/bodies (14) is/are arranged in the filter chamber (13),
wherein a fan (19) driving the air flow is provided in the air passage downstream of the filter chamber (13),
wherein the air flow in the interior of the filter body/bodies (14) is aspirated and after flowing to the filter body/bodies (14), is conducted upwards through the fan (19), which is arranged above the filter bodies (14), out of the filter chamber (13), wherein the filtered air flow is passed to the outside again at exhaust openings (15) located in the lower region of the system,
**characterised**
**in that** the particle impact separator (20) is designed with two vertically arranged groups (2 and 3) of V profiles (21, 31), which are arranged parallel to one another and are designed to be V-shaped in cross section, wherein the V profiles (21) of the first group (2) are orientated with the peak (22) of the V-shaped cross section in the flow direction (5), and the V profiles (31) of the second group (3) are orientated with the peak (32) of the V-shaped cross section opposite to the flow direction (5) and are offset to the rear (H) compared to the first group (2), wherein the V profiles (31) of the second group (3) are offset laterally (V) and to the rear in such a manner compared to the V profiles (21) of the first group (2) that the peaks (32) of the V-shaped cross section are arranged in the centre between the gaps of the peaks (22) of the V-shaped cross section of the V profiles (21) of the first group (2), and in that the shanks (23, 33) protruding from the peaks (22, 32) of the V-shaped cross sections overlap in a part region and thus form a slotted channel (4).

2. The welding-smoke extraction system according to claim 1,
**characterised**
**in that** a catch pan (16), which is designed similarly to a drawer in particular, is provided below the vertical channel (12) and/or the particle impact separator (20).

3. The welding-smoke extraction system according to claim 1 or 2,
**characterised**
**in that** an aspiration opening (11) is provided on the upper side of the housing (17) of the system.

4. The welding-smoke extraction system according to one of claims 1 to 3,
**characterised**
**in that** one or a plurality of guide channels (18) are arranged, by means of which the air flow can be conducted from above the filter chamber (13) to the lower region of the system to the extraction openings (15).

5. The welding-smoke extraction system according to one of the preceding claims,
**characterised**
**in that** the guide channel(s) (18) is/are guided laterally past the fan (19) and filter chamber (13).

## Revendications

1. Installation d'aspiration de fumée de soudage (1) ayant une structure verticale,
étant prévu dans la partie supérieure de l'installation un orifice d'aspiration (11) grâce auquel un air chargé de fumée de soudage peut être aspiré,
étant prévu à l'intérieur de l'installation un canal vertical (12) par lequel l'air pollué aspiré peut être guidé vers le bas à l'intérieur de l'installation,
le canal vertical (12) présentant latéralement, dans la partie inférieure de l'installation, un orifice à travers lequel le flux d'air est dévié vers un séparateur de particules à impact (20) et guidé à travers celui-ci,
étant prévue sur le trajet de l'air, après le séparateur de particules à impact (20), une cellule de filtration (13) dans laquelle le flux d'air arrive en aval du séparateur de particules à impact, un ou plusieurs corps filtrants (14) étant disposés dans la cellule de filtration (13),
une soufflerie (19) entraînant le flux d'air étant prévue sur le trajet de l'air en aval de la cellule de filtration (13),
le flux d'air étant aspiré à l'intérieur du ou des corps filtrants (14) et guidé vers le haut après avoir traversé le ou les corps filtrants (14) par la soufflerie (19) disposée au-dessus des corps filtrants (14) hors de la cellule de filtration (13), le flux d'air filtré étant rejeté à l'extérieur par des orifices de soufflage (15) situés dans la partie inférieure de l'installation,
**caractérisée en ce**
**que** le séparateur de particules à impact (20) est réalisé avec deux groupes disposés verticalement (2 et 3) de profilés en V disposés parallèlement les uns aux autres (21, 31) qui sont conçus avec une section transversale en forme de V, les profilés en V (21) du premier groupe (2) étant orientés par la pointe (22) de la section transversale en forme de V dans le sens d'afflux (5) et les profilés en V (31) du second groupe (3) étant orientés par la pointe (32) de la section transversale en forme de V dans le sens inverse du sens d'afflux (5) et étant décalés vers l'arrière (H) par rapport au premier groupe (2), les profilés en V (31) du second groupe (3) étant ainsi décalés latéralement (V) et vers l'arrière par rapport aux profilés en V (21) du premier groupe (2) de manière à ce que les pointes (32) de la section transversale en forme de V soient disposées au centre entre les intervalles séparant les pointes (22) de la section transversale en forme de V des profilés en V (21) du premier groupe (2) et que les branches (23, 33) dépassant des pointes (22, 32) des sections transversales en forme de V (23, 33) se recouvrent dans une zone partielle et constituent ainsi un canal à fente (4).

2. Installation d'aspiration de fumée de soudage selon la revendication 1,
**caractérisé en ce**
**que**, sous le canal vertical (12) et/ou le séparateur de particules à impact (20), il est prévu un bac de récupération (16) qui est conformé notamment à la manière d'un tiroir.

3. Installation d'aspiration de fumée de soudage selon la revendication 1 ou 2,
**caractérisé en ce**
**que** l'orifice d'aspiration (11) est prévu sur la face supérieure du boîtier (17) de l'installation.

4. Installation d'aspiration de fumée de soudage selon une des revendications 1 à 3,
**caractérisée en ce**
**que** sont disposés un ou plusieurs canaux de guidage (18) au moyen desquels le flux d'air peut être guidé depuis le haut de la cellule de filtration (13) vers la partie inférieure de l'installation en direction des orifices de soufflage (15).

5. Installation d'aspiration de fumée de soudage selon une des revendications précédentes,
**caractérisée en ce**
**que** le ou les canaux de guidage (18) passent sur le côté de la soufflerie (19) et de la cellule de filtration (13).
